# EUROPÄISCHE PATENTSCHRIFT

(11) **EP 3 500 442 B1**
(45) Veröffentlichungstag und Bekanntmachung des Hinweises auf die Patenterteilung: **05.08.2020**
(21) Anmeldenummer: 17729468.3
(22) Anmeldetag: 13.06.2017
(51) Int. Cl.: B60C 11/03

(54) **FAHRZEUGLUFTREIFEN**
PNEUMATIC TIRE
PNEUMATIQUE

(30) Priorität: 18.08.2016 DE 102016215448
(43) Veröffentlichungstag der Anmeldung: 26.06.2019
(73) Patentinhaber: Continental Reifen Deutschland GmbH, 30165 Hannover (DE)
(72) Erfinder: HERBST, Stephan, 30855 Langenhagen (DE); RITTWEGER, Stefan, 30826 Garbsen (DE)
(74) Vertreter: Finger, Karsten
(86) Internationale Anmeldenummer: PCT/EP2017/064351
(87) Internationale Veröffentlichungsnummer: WO 2018/033268

(56) Entgegenhaltungen:
- EP-A1- 1 950 060
- WO-A1-2016/121858
- DE-A1-102007 047 496
- JP-U- S5 675 004
- US-A1- 2009 320 981

## Beschreibung

Die Erfindung betrifft einen Fahrzeugluftreifen, insbesondere All-Terrain- oder Offroad-Reifen, mit einem Laufstreifen, welcher durch die vorgesehene Profiltiefe aufweisende Umfangsnuten in in Umfangsrichtung umlaufende Blockreihen und/oder profilblockartig strukturierte Profilrippen gegliedert ist, wobei Blockreihen durch Quernuten in Blöcke geteilt sind und ebenso wie profilblockartig strukturierte Profilrippen mit von den Umfangsnuten ausgehenden Sacknuten versehen sind,
wobei Quernuten und/oder Sacknuten vorgesehen sind, welche durch eine Anbindung der in Umfangsrichtung benachbarten Blöcke und/oder der blockartigen Strukturen eine gegenüber der Profiltiefe geringere Tiefe aufweisen, wobei die Anbindung zumindest zwei Anbindungsstufen unterschiedlicher Höhen aufweist, von welchen die niedrigste jeweils bei einem Einmündungsbereich der Quernuten und/oder beim Einmündungsbereich der Sacknuten in die Umfangsnuten ausgebildet ist und die höchste Anbindungsstufe in Quernuten in deren mittleren Bereich und in Sacknuten in deren inneren Endbereich ausgebildet ist.

Ein derartiger gattungsbildender Fahrzeugluftreifen ist beispielsweise aus der US 2009/0320981 A1 bekannt. Der Laufstreifen des Reifens weist zwei mittlere, blockartig strukturierte Profilrippen auf, welche durch eine im Reifenzenit verlaufende Umfangsnut voneinander getrennt sowie laufstreifenaußenseitig durch je eine weitere Umfangsnut begrenzt sind. Die Profilrippen sind in Umfangsrichtung abwechselnd mit durchquerenden Quernuten und mit Sacknuten, welche von der laufstreifenaußenseitig an die jeweilige Profilrippe angrenzenden Umfangsnut ausgehen, strukturiert. Gemäß einer Variante sind in den Sacknuten Anbindungen ausgebildet, welche in Umfangsrichtung zwischen den blockartigen Strukturen der Profilrippe verlaufen und jeweils zwei Anbindungsstufen unterschiedlicher Höhen aufweisen, wobei sich die niedrigere Anbindungsstufe am Einmündungsbereich der jeweiligen Sacknut befindet.

Aus der EP 1950 060 A1 ist ein Fahrzeugluftreifen mit einem Laufstreifen mit schulterseitigen Profilblockreihen bekannt, welche von je einer Umfangsrille begrenzt sind. In den Profilblöcken der schulterseitigen Profilblockreihen sind an der angrenzenden Umfangsrille zur Laufstreifenperipherie offene Vertiefungen mit jeweils zumindest zwei axial nebeneinander liegenden, in Umfangsrichtung langgestreckten Stufen ausgebildet. Diese Stufen sollen die Fahreigenschaften auf matschigem Untergrund verbessern.

Ferner ist aus der JP S56 75004 U ein Fahrzeugluftreifen mit einem Laufstreifen bekannt, welcher von Umfangs- oder Querrillen ausgehende, zur Laufstreifenperipherie offene, mit Stufen versehene und als Abriebindikatoren dienende Vertiefungen aufweist.

All-Terrain- oder Offroad-Reifen weisen üblicherweise einen Laufstreifen auf, welcher eine ausgeprägte Blockstruktur besitzt, beispielsweise indem der Laufstreifen mit Profilblockreihen und/oder mit blockartig strukturierten Laufstreifenbändern versehen ist, wobei je nach bevorzugtem Einsatzzweck, ob der Reifen hauptsächlich für einen Offroad-Einsatz vorgesehen ist oder ob der Reifen auch auf befestigtem Untergrund gefahren wird, eine rippenartige Strukturierung oder eine Strukturierung in Blockreihen überwiegt. Bei bekannten Reifen, die gleichermaßen für einen Einsatz unter Offroad-Bedingungen und für einen Einsatz auf befestigtem Untergrund, also auf Straßen, geeignet sein sollen, gehen gute Offroad-Eigenschaften meist mit weniger guten Fahreigenschaften auf Straßen, insbesondere auf trockenen Straßen, einher. Insbesondere durch die in Laufstreifen von Offroad-Reifen erforderliche relativ hohe Profiltiefe, die auf unbefestigtem Untergrund zur Sicherstellung guter Traktionseigenschaften notwendig ist, bewirkt unweigerlich Nachteile auf trockenen befestigten Fahrbahnen, insbesondere was die Handlingeigenschaften und die Bremseigenschaften betrifft.

Der Erfindung liegt somit die Aufgabe zu Grunde, einen Fahrzeugluftreifen mit einem Laufstreifen der eingangs genannten Art derart zu verbessern, dass er auch gute Fahreigenschaften auf befestigtem, insbesondere trockenem Untergrund aufweist, wobei gute Traktionseigenschaften auf unbefestigtem, insbesondere matschigem Untergrund erhalten bleiben sollen.

Gelöst wird die gestellte Aufgabe erfindungsgemäß dadurch, dass die Anbindungsstufen mit Stufenkanten versehen sind, entlang welchen auf den Stufenflächen Stege verlaufen.

Durch die gemäß der Erfindung vorgesehenen Anbindungsstufen in Quernuten und Sacknuten erfolgt eine besonders vorteilhafte Versteifung des Laufstreifens. Die in Folge der großen Profiltiefe hohen Profilpositive verformen sich nicht mehr so stark beim Fahren auf trockenem, befestigtem Untergrund, sodass die Handlingeigenschaften und die Bremseigenschaften auf solchem Untergrund wesentlich verbessert sind. Die höchste Anbindungsstufe ist sogar in der Lage, auf weichem, matschigem Untergrund das Traktionsverhalten zu verbessern, da sich seichtere Nuten schneller und leichter mit weichem Untergrundmaterial befüllen.

Die Stege tragen auf besonders effektive Weise zu einer Verbesserung der Traktion auf weichem bzw. matschigem Untergrund und auch auf Schnee bei, vor allem deshalb, weil sie ein Durchrutschen von weichem Untergrundmaterial durch die Quernuten behindern.

Bei einer bevorzugten Ausführungsform der Erfindung ist vorgesehen, dass die Anbindung zwei Anbindungsstufen unterschiedlicher Höhen aufweist bzw. sich aus zwei Anbindungsstufen unterschiedlicher Höhen zusammensetzt. Mit zwei Anbindungsstufen unterschiedliche Höhen lässt sich besonders gut eine vorteilhafte Versteifung der Profilpositive erzielen.

Der Effekt einer besonders vorteilhaften Beeinflussung der Profilsteifigkeit lässt sich durch eine Anzahl weiterer Maßnahmen unterstützen. Zu diesen Maßnahmen gehört, dass die niedrigste Anbindungsstufe eine Höhe von 15 % bis 25 % der Profiltiefe aufweist und ferner, dass die niedrigste Anbindungsstufe eine Stufenfläche aufweist, deren Erstreckungsrichtung in Umfangsrichtung größer ist als ihre Erstreckung in Richtung der Quernut- oder Sacknuterstreckung.

Besonders vorteilhaft für eine optimale Anbindung ist bei in einer Sacknut ausgebildeten Anbindungsstufen, wenn die höchste Anbindungsstufe eine Stufenfläche aufweist, die um mindestens 30 % größer ist als die Stufenfläche der niedrigsten Anbindungsstufe. Bei einer in einer Quernut ausgebildeten Anbindung ist es vorteilhaft, wenn die höchste Anbindungsstufe über 60 % bis 80 % der Erstreckungslänge der Quernut ausgebildet ist.

Für die Bremseigenschaften und die Handlingeigenschaften auf trockenem, befestigtem Untergrund ist es besonders günstig, wenn bei der in einer Quernut ausgebildeten Anbindung die höchste Anbindungsstufe eine Höhe aufweist, die 30 % bis 40 % der Profiltiefe beträgt und wenn bei der in einer Sacknut ausgebildeten Anbindung die höchste Anbindungsstufe an ihrer Stufenkante eine Höhe aufweist, die 30 % bis 40 % der Profiltiefe beträgt, wobei die Höhe in Richtung Sacknutende ansteigt und am Sacknutende um bis zu 1,0 mm größer sein kann.

Bei Ausführungen, bei welchen die Anbindung zwei Anbindungsstufen unterschiedlicher Höhen aufweist oder sich aus zwei Anbindungsstufen unterschiedlicher Höhen zusammensetzt, ist es ferner günstig, wenn diese mit Stufenkanten versehen sind, die sich zueinander zumindest im Wesentlichen unter einem Winkel von 10° bis 30° erstrecken. Auf diese Weise können die Anbindungsstufen auf weichem, matschigem Untergrund oder auf Schnee zusätzliche Griffkanten zur Verfügung stellen.

Von besonderem Vorteil ist auch eine Ausführung, bei welcher die Stege eine Höhe und eine Breite an ihrer Basis von jeweils 0,5 mm bis 1,0 mm aufweisen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Umfangsabschnitt eines Laufstreifens eines erfindungsgemäßen Fahrzeugluftreifens,
Fig. 2 einen Schnitt entlang der Linie II-II der Fig. 1 und
Fig. 3 einen Schnitt entlang der Linie III-III der Fig. 1.

Die Erfindung befasst sich mit einer besonderen Ausgestaltung eines Laufstreifens 1 eines Fahrzeugluftreifens, welcher für einen Offroad-Einsatz und einen Einsatz auf Straßen gleichermaßen gut geeignet ist. Solche Reifen werden üblicherweise als All-Terrain-Reifen oder als Offroad-Reifen bezeichnet, ihre Laufstreifen haben eine größere Profiltiefe - in der Größenordnung von 12 mm - als die üblichen Reifen für Personenkraftwagen. Die größere Profiltiefe ist vor allem für gute Traktionseigenschaften solcher Reifen auf unbefestigtem Untergrund erforderlich.

In der nachfolgenden Beschreibung und den Patentansprüchen beziehen sich Angaben zu Winkeln bei Nuten auf deren Mittellinien oder deren Erstreckungsrichtungen. Sämtliche Höhen sind in radialer Richtung ermittelt.

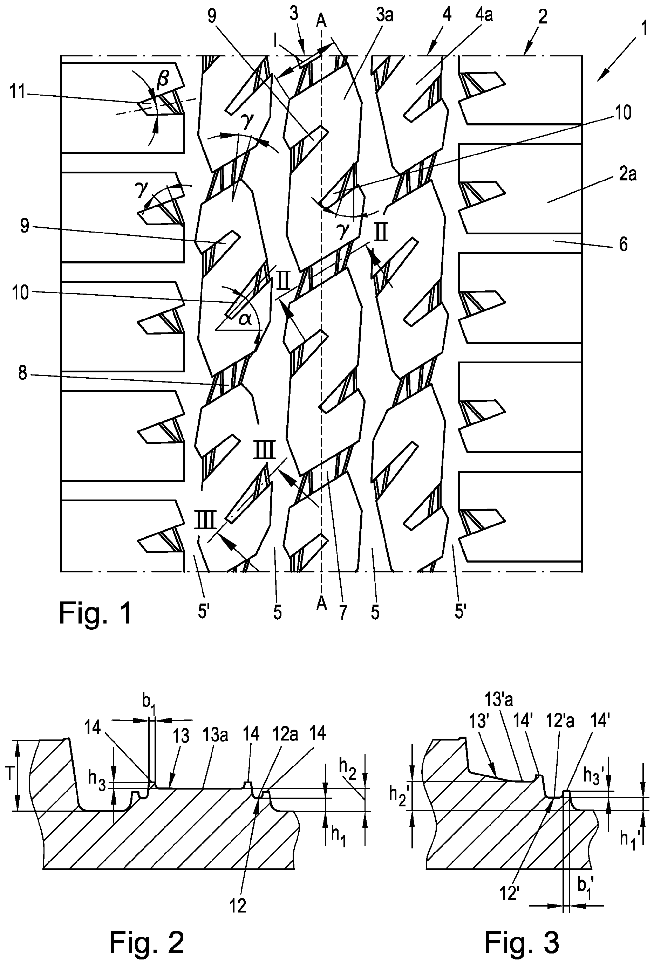

Der in Fig. 1 gezeigte Laufstreifen 1 weist eine ausgeprägte Blockstruktur mit jeweils einer schulterseitigen Blockreihe 2, einer entlang des Reifenäquators (Linie A-A) verlaufenden zentralen Blockreihe 3 und zwei mittleren Blockreihen 4, die zwischen der zentralen Blockreihe 3 und den schulterseitigen Blockreihen 2 angeordnet sind, auf Zwischen der zentralen Blockreihe 3 und den beiden mittleren Blockreihen 4 verlaufen Umfangsnuten 5, zwischen den mittleren Blockreihen 4 und den schulterseitigen Blockreihen 2 verläuft jeweils eine Umfangsnut 5'. Die Tiefe der Umfangsnuten 5,5' entspricht der vorgesehenen, maximalen Profiltiefe T (Fig. 2). Die einzelnen Blockreihen 2, 3 und 4 setzen sich in Umfangsrichtung aus Blöcken 2a, 3a und 4a zusammen, die voneinander durch Quernuten 6 (Blöcke 2a), Quernuten 7 (Blöcke 3a) und Quernuten 8 (Blöcke 4a) getrennt sind. Durch die Ausgestaltung der in Umfangsrichtung orientierten Blockkanten der Blöcke 2a, 3a und 4a weisen die Umfangsnuten 5,5' in Draufsicht einen leicht wellen- bzw. zickzackförmigen Verlauf auf. Insbesondere die mittleren Blockreihen 4 und/oder die zentrale Blockreihe 3 können durch blockartig strukturierte Rippen ersetzt sein.

Die Blöcke 4a in den mittleren Blockreihen 4 sowie die Blöcke 3a in der zentralen Blockreihe 3 sind in Umfangsrichtung langgestreckt und in Draufsicht im Wesentlichen S-förmig gestaltet, indem Sacknuten 9, 10 von den seitlich der Blockreihen 3, 4 verlaufenden Umfangsnuten 5,5' ausgehend in die Blöcke 3a, 4a hinein verlaufen. Die beiden Sacknuten 9, 10 sind in Umfangsrichtung zueinander versetzt und weisen weitgehend übereinstimmende Erstreckungsrichtungen auf, wobei sie mit der axialen Richtung einen Winkel α von 20° bis 50° einschließen. Auch in die Blöcke 2a der schulterseitigen Blockreihen 2 verlaufen ausgehend von der Umfangsnut 5 Sacknuten 11 hinein, jeweils etwa mittig im Block 2a und im Wesentlichen in axialer Richtung bzw. unter einem kleinen spitzen Winkel β von bis zu 30° relativ zu dieser. Die die Blöcke 3a der zentralen Blockreihe und die Blöcke 4a der mittleren Blockreihen 4 voneinander trennenden Quernuten 7 und 8 verlaufen im Wesentlichen parallel zu den Sacknuten 9, 10. Sämtliche Blöcke 2a, 3a, 4a können ferner in an sich bekannter Weise mit nicht dargestellten Einschnitten, die eine Breite von 0,4 mm bis 1,0 mm aufweisen und sich im Wesentlichen in axialer Richtung erstrecken, versehen sein.

Wird anstelle jeder mittleren Blockreihe und/oder der zentralen Blockreihe eine blockartig strukturierte Rippe vorgesehen, weist diese keine durchgehende Quernuten sondern ebenfalls in Umfangsrichtung gegeneinander versetzt angeordnete, abwechselnd an der einen und der anderen Umfangsnut beginnende Sacknuten auf, derart, dass die blockartigen Profilpositive ein in Umfangsrichtung mäanderförmig umlaufendes Band bilden.

Die Vielzahl an Quernuten 6, 7, 8 und Sacknuten 9, 10 und 11 bewirkt gute Offroad-Eigenschaften erfindungsgemäßer Fahrzeugluftreifen, insbesondere auf weichem oder matschigem Untergrund. Um auf trockenem Untergrund, insbesondere auf befestigten Straßen, trotz der hohen Profiltiefe gute Handlingeigenschaften und Bremseigenschaften sicherzustellen, sind die Quernuten 6, 7, 8 und die Sacknuten 9, 10 und 11 auf besondere Weise mit einer geringeren Tiefe ausgeführt als die Umfangsnuten 5, 5'. Diese geringere Tiefe wird durch eine besonders vorteilhafte Anbindung der Profilpositive aneinander erreicht.

Fig. 2 veranschaulicht die Anbindung anhand einer Quernut 7, Fig. 3 anhand einer Sacknut 10. Wie Fig. 2 zeigt, befindet sich bei den Mündungsbereichen der Quernut 7 in je eine der Umfangsnuten 5 eine erste Anbindungsstufe 12, die, vom Nutgrund der Umfangsnuten 5 aus ermittelt, eine Höhe h₁ von 15 % bis 25 % der Profiltiefe T aufweist. Diese erste Anbindungsstufe 12 kann sich, je nach der Ausgestaltung der Blöcke 3a, auch ein kurzes Stück entlang der Umfangsnut 5 in Umfangsrichtung erstrecken, indem beispielsweise die Stufenflanke im Wesentlichen in Fortsetzung einer die Umfangsnut 5 begrenzenden Blockflanke des jeweiligen Profilblockes 3a verläuft. Die obere Stufenfläche 12a der Anbindungsstufe 12 weist ferner in Umfangsrichtung eine größere Erstreckung auf als in jener Richtung, in welcher die jeweilige Quernut 7 verläuft bzw. sich erstreckt. Über den Großteil der Erstreckung der Quernut 7, insbesondere über 60 % bis 80 % ihrer Erstreckungslänge 1, befindet sich eine zweite Anbindungsstufe 13, deren Höhe h₂, ebenfalls bezogen auf den Grund der Umfangsnuten 5, um mindestens 1,0 mm größer ist als die Höhe h₁ und 30 % bis 40 % der Profiltiefe T beträgt. Die Stufenflächen 12a, 13a der ersten und der zweiten Anbindungsstufen 12, 13 weisen jeweils ein konstantes Niveau auf. Die Erstreckungsrichtungen der Stufenkanten der zweiten Anbindungsstufe 13 können parallel zueinander oder unter einem spitzen Winkel γ von 10° bis 30° zueinander verlaufen.

Unmittelbar an die Stufenkanten der Anbindungsstufen 12, 13 anschließend sowie entlang der Anbindungsstufen 12, 13 verlaufend ist auf deren Stufenflächen 12a, 13a jeweils ein Steg 14 ausgebildet, welcher, bezogen auf die jeweilige Stufenfläche 12a, 13a, eine Höhe h₃ von 0,5 mm bis 1,0 mm und an seiner Basis eine Breite bi von ebenfalls 0,5 mm bis 1,0 mm aufweist. Die Stege 14 tragen zu einer Verbesserung der Traktion auf weichem bzw. matschigem Untergrund bei, da sie ein Durchrutschen von derartigem Untergrundmaterial durch die Quernuten 7 behindern. Die Stege 14 verbessern zudem auch die Traktion des Reifens auf Schnee.

Auch die Sacknuten 9, 10 und 11 in den Blöcken 2a, 3a und 4a der Blockreihen 2, 3 und 4 weisen eine über zwei Anbindungsstufen 12', 13' verringerte Tiefe auf, wie es nun anhand einer Sacknut 10 und Fig. 3 näher beschrieben wird. Die erste Anbindungsstufe 12' befindet sich beim Mündungsbereich der Sacknut 10 in die Umfangsnut 5 und weist eine Höhe h₁' auf, die der Höhe h₁, wie bereits beschrieben, entspricht. Die zweite Anbindungsstufe 13' schließt unmittelbar an die erste Anbindungsstufe 12' an und erstreckt sich von der ersten Anbindungsstufe 12' bis zum inneren Ende der Sacknut 9, wobei ihre Höhe h₂' zum Ende der Sacknut 10 zunimmt. Die Höhe h₂' beträgt an der Stufenkante um mindestens 1,0 mm mehr als die Höhe h₁' und 30 % bis 40 % der Profiltiefe T, am inneren Ende der Sacknut 9 ist die Höhe h₂' um bis zu 1,0 mm größer. Je nach der Ausgestaltung der Blockflanken entlang der Umfangsnuten 5,5' kann sich die erste Anbindungsstufe 12' auch ein kurzes Stück entlang der Umfangsnuten 5,5' erstrecken. Die Stufenkanten der beiden Anbindungsstufen 12', 13' können parallel zueinander verlaufen, vorzugsweise verlaufen sie derart, dass ihre Erstreckungsrichtungen miteinander einen spitzen Winkel γ von 10° bis 30° einschließen, wobei sie einen Verlauf aufweisen können, der nicht gerade ist und mit zumindest einer Knickstelle versehen ist. Die Stufenfläche 13'a der höheren Anbindungsstufe 13 ist größer, insbesondere um mindesten 30 %, als die Stufenfläche 12'a. Die zweite Anbindungsstufe 13' bedeckt somit einen größeren Teil des Rillengrundes als die erste Anbindungsstufe 12'. Auch die Anbindungsstufen 12', 13' können entlang der Stufenkanten ausgebildete Stege 14' aufweisen, deren Höhe h₃' und Breite b₁' 0, 5 mm bis 1,0 mm betragen.

Es ist grundsätzlich möglich, mehr als zwei, insbesondere drei Anbindungsstufen vorzusehen, deren Höhe Richtung Nutinneres schrittweise größer wird. In diesem Fall weisen die niedrigste Anbindungsstufe jene Dimensionen auf, die zur niedrigeren Anbindungsstufe in den beschriebenen Beispielen angegeben sind, die höchste jene, die zur höheren Anbindungsstufe in den beschriebenen Beispielen angegeben sind. Die Anbindungsstufen sind derart terrassenförmig angeordnet.

### Bezugsziffernliste

- 1 ...........................: Laufstreifen
- 2 ...........................: schulterseitige Blockreihe
- 2a..........................: Block
- 3 ...........................: zentrale Blockreihe
- 3a..........................: Block
- 4 ...........................: mittlere Blockreihe
- 4a..........................: Block
- 5,5' ......................: Umfangsnut
- 6, 7, 8....................: Quernut
- 9, 10, 11................: Sacknut
- 12, 12' ..................: Anbindungsstufe
- 12a, 12'a...............: Stufenfläche
- 13, 13' ..................: Anbindungsstufe
- 13a, 13'a...............: Stufenfläche
- 14, 14' ..................: Steg
- α, β, γ....................: Winkel
- b₁, b₁' ...........: Breite
- h₁, h₂, h₃................: Höhe
- h₁', h₂', h₃' ............: Höhe
- 1............................: Erstreckungslänge
- T...........................: Profiltiefe

## Patentansprüche

1. Fahrzeugluftreifen, insbesondere All-Terrain- oder Offroad-Reifen, mit einem Laufstreifen (1), welcher durch die vorgesehene Profiltiefe (T) aufweisende Umfangsnuten (5, 5') in in Umfangsrichtung umlaufende Blockreihen (2, 3, 4) und/oder profilblockartig strukturierte Profilrippen gegliedert ist, wobei Blockreihen (2, 3, 4) durch Quernuten (6, 7, 8) in Blöcke (2a, 3a, 4a) geteilt sind und ebenso wie profilblockartig strukturierte Profilrippen mit von den Umfangsnuten (5, 5') ausgehenden Sacknuten (9, 10, 11) versehen sind,
wobei Quernuten (6, 7, 8) und/oder Sacknuten (9, 10, 11) vorgesehen sind, welche durch eine Anbindung der in Umfangsrichtung benachbarten Blöcke (2a, 3a, 4a) und/oder der blockartigen Strukturen eine gegenüber der Profiltiefe (T) geringere Tiefe aufweisen, wobei die Anbindung zumindest zwei Anbindungsstufen (12, 12', 13, 13') unterschiedlicher Höhen (h₁, h₂, h₃) aufweist, von welchen die niedrigste jeweils bei einem Einmündungsbereich der Quernuten (6, 7, 8) und/oder beim Einmündungsbereich der Sacknuten (9, 10, 11) in die Umfangsnuten (5, 5') ausgebildet ist und die höchste Anbindungsstufe (13, 13') in Quernuten (6, 7, 8) in deren mittleren Bereich und in Sacknuten (9, 10, 11) in deren inneren Endbereich ausgebildet ist,
**dadurch gekennzeichnet,**
**dass** die Anbindungsstufen (12,12', 13,13') mit Stufenkanten versehen sind, entlang welchen auf den Stufenflächen (12a, 12'a, 13a, 13'a) Stege (14,14') verlaufen.

2. Fahrzeugluftreifen nach Anspruch 1, **dadurch gekennzeichnet, dass** die Anbindung zwei Anbindungsstufen (12, 12', 13, 13') unterschiedlicher Höhen (h₁, h₂, h₁', h₂') aufweist oder sich zwei aus Anbindungsstufen (12, 12', 13, 13') unterschiedlicher Höhen (h₁, h₂, h₁', h₂') zusammensetzt.

3. Fahrzeugluftreifen nach Anspruch 1 oder 2, **dadurch gekennzeichnet, dass** die niedrigste Anbindungsstufe (12, 12') eine Höhe (h₁, h₁') von 15 % bis 25 % der Profiltiefe (T) aufweist.

4. Fahrzeugluftreifen nach einem der Ansprüche 1 bis 3, **dadurch gekennzeichnet, dass** die niedrigste Anbindungsstufe (12, 12') eine Stufenfläche (12a, 12a') aufweist, deren Erstreckung in Umfangsrichtung größer ist als ihre Erstreckung in Richtung der Quernut-oder Sacknuterstreckung.

5. Fahrzeugluftreifen nach einem der Ansprüche 1 bis 4, **dadurch gekennzeichnet, dass** bei der in einer Sacknut (9, 10, 11) ausgebildeten Anbindung die höchste Anbindungsstufe (13') eine Stufenfläche (13'a) aufweist, die um mindestens 30 % größer ist als die Stufenfläche (12'a) der niedrigsten Anbindungsstufe (12').

6. Fahrzeugluftreifen nach Anspruch 1, **dadurch gekennzeichnet, dass** bei der in einer Quernut (6, 7, 8) ausgebildeten Anbindung die höchste Anbindungsstufe (13) über 60 % bis 80 % der Erstreckungslänge (1) der Quernut (6, 7, 8) ausgebildet ist.

7. Fahrzeugluftreifen nach einem der Ansprüche 1, 2 oder 6, **dadurch gekennzeichnet, dass** bei der in einer Quernut (6, 7, 8) ausgebildeten Anbindung die höchste Anbindungsstufe (13) eine Höhe (h₂) aufweist, die 30 % bis 40 % der Profiltiefe (T) beträgt.

8. Fahrzeugluftreifen nach Anspruch 1 oder 5, **dadurch gekennzeichnet, dass** bei der in einer Sacknut (9, 10, 11) ausgebildeten Anbindung die höchste Anbindungsstufe (13') an ihrer Stufenkante eine Höhe (h₂') aufweist, die 30 % bis 40 % der Profiltiefe (T) beträgt, wobei die Höhe (h₂') in Richtung Sacknutende ansteigt und am Sacknutende um bis zu 1,0 mm größer ist.

9. Fahrzeugluftreifen nach einem der Ansprüche 2 bis 7, **dadurch gekennzeichnet, dass** die Anbindung zwei Anbindungsstufen (12, 12', 13, 13') unterschiedlicher Höhen (h₁, h₂, h₁', h₂') aufweist oder sich aus zwei Anbindungsstufen (12, 12', 13, 13') unterschiedlicher Höhen (h₁, h₂, h₁', h₂') zusammensetzt, welche mit Stufenkanten versehen sind, die sich zueinander zumindest im Wesentlichen unter einem Winkel (γ) von 10° bis 30° erstrecken.

10. Fahrzeugluftreifen nach einem der Ansprüche 1 bis 9, **dadurch gekennzeichnet, dass**, die Stege (14, 14') eine Höhe (h₃, h₃') und eine Breite (b₁, b₁') an ihrer Basis von jeweils 0,5 mm bis 1,0 mm aufweisen.

## Claims

1. Pneumatic vehicle tyre, in particular all-terrain or off-road tyre, having a tread (1) which is divided by circumferential grooves (5, 5'), which have the provided profile depth (T), into block rows (2, 3, 4) which run in encircling fashion in a circumferential direction and/or profile ribs which are structured in the manner of profile blocks, wherein block rows (2, 3, 4) are divided by transverse grooves (6, 7, 8) into blocks (2a, 3a, 4a) and, like the profile ribs structured in the manner of profile blocks, are equipped with blind grooves (9, 10, 11) proceeding from the circumferential grooves (5, 5'),
wherein transverse grooves (6, 7, 8) and/or blind grooves (9, 10, 11) are provided which, owing to a connection of those blocks (2a, 3a, 4a) which are adjacent in the circumferential direction and/or of the block-like structures, have a depth smaller than the profile depth (T), wherein the connection has at least two connection steps (12, 12', 13, 13') of different heights (h₁, h₂, h₃), of which the lowest is formed in each case at the region in which the transverse grooves (6, 7, 8) and/or blind grooves (9, 10, 11) open into the circumferential grooves (5, 5'), and the highest connection step (13, 13') is formed in transverse grooves (6, 7, 8) in the middle region thereof and in blind grooves (9, 10, 11) in the inner end region thereof
**characterized**
**in that** the connection steps (12, 12', 13, 13') are equipped with step edges along which webs (14, 14') run on the step surfaces (12a, 12'a, 13a, 13'a).

2. Pneumatic vehicle tyre according to Claim 1, **characterized in that** the connection has two connection steps (12, 12', 13, 13') of different heights (h₁, h₂, h₁', h₂') or is made up of two connection steps (12, 12', 13, 13') of different heights (h₁, h₂, h₁', h₂').

3. Pneumatic vehicle tyre according to Claim 1 or 2, **characterized in that** the lowest connection step (12, 12') has a height (h₁, h₁') of 15% to 25% of the profile depth (T).

4. Pneumatic vehicle tyre according to any of Claims 1 to 3, **characterized in that** the lowest connection step (12, 12') has a step surface (12a, 12a') whose extent in the circumferential direction is greater than its extent in the direction of the transverse groove or blind groove extent.

5. Pneumatic vehicle tyre according to any of Claims 1 to 4, **characterized in that**, in the case of the connection formed in a blind groove (9, 10, 11), the highest connection step (13') has a step surface (13'a) which is at least 30% larger than the step surface (12'a) of the lowest connection step (12').

6. Pneumatic vehicle tyre according to Claim 1, **characterized in that**, in the case of the connection formed in a transverse groove (6, 7, 8), the highest connection step (13) is formed over 60% to 80% of the extent length (1) of the transverse groove (6, 7, 8) .

7. Pneumatic vehicle tyre according to any of Claims 1, 2 and 6, **characterized in that**, in the case of the connection formed in a transverse groove (6, 7, 8), the highest connection step (13) has a height (h₂) which amounts to 30% to 40% of the profile depth (T) .

8. Pneumatic vehicle tyre according to Claim 1 or 5, **characterized in that**, in the case of the connection formed in a blind groove (9, 10, 11), the highest connection step (13') has, at its step edge, a height (h₂') which amounts to 30% to 40% of the profile depth (T), wherein the height (h₂') rises in the direction of the blind groove end and is up to 1.0 mm greater at the blind groove end.

9. Pneumatic vehicle tyre according to any of Claims 2 to 7, **characterized in that** the connection has two connection steps (12, 12', 13, 13') of different heights (h₁, h₂, h₁', h₂') or is made up of two connection steps (12, 12', 13, 13') of different heights (h₁, h₂, h₁', h₂'), which are equipped with step edges extending at least substantially at an angle (γ) of 10° to 30° with respect to one another.

10. Pneumatic vehicle tyre according to any of Claims 1 to 9, **characterized in that** the webs (14, 14') have a height (h₃, h₃') and a width (b₁, b₁') at their base of in each case 0.5 mm to 1.0 mm.

## Revendications

1. Pneumatique de véhicule, en particulier pneumatique tout-terrain ou hors-route, comprenant une bande de roulement (1) qui est subdivisée, par des rainures circonférentielles (5, 5') ayant la profondeur de profilé (T) prévue, en rangées de blocs (2, 3, 4) s'étendant dans la direction circonférentielle et/ou en nervures profilées structurées à la manière de blocs profilés, des rangées de blocs (2, 3, 4) étant divisées en blocs (2a, 3a, 4a) par des rainures transversales (6, 7, 8) et des nervures profilées structurées comme des blocs profilés étant pourvues de rainures borgnes (9, 10, 11) partant des rainures circonférentielles (5, 5'),
des rainures transversales (6, 7, 8) et/ou des rainures borgnes (9, 10, 11) étant prévues qui, en raison d'une liaison des blocs (2a, 3a, 4a) adjacents dans la direction circonférentielle et/ou des structures de type blocs, ont une profondeur inférieure à la profondeur de profilé (T), la liaison comportant au moins deux niveaux de liaison (12, 12', 13, 13') de hauteurs différentes (h₁, h₂, h₃), dont le niveau de liaison le plus bas est formé dans une zone des rainures transversales (6, 7, 8) et/ou dans la zone des rainures borgnes (9, 10, 11) qui débouchent dans les rainures circonférentielles (5, 5') et le niveau de liaison le plus haut (13, 13') est formé dans les rainures transversales (6, 7, 8) dans leur zone médiane et dans les rainures borgnes (9, 10 , 11) dans leur région d'extrémité intérieure,
**caractérisé en ce que**
les niveaux de liaison (12, 12', 13, 13') sont pourvus de bords de niveau le long desquels des nervures (14, 14') s'étendent sur les surfaces de niveau (12a, 12'a, 13a, 13'a).

2. Pneumatique de véhicule selon la revendication 1, **caractérisé en ce que** la liaison comporte deux niveaux de liaison (12, 12', 13, 13') de hauteurs différentes (h₁, h₂, h₁', h₂') ou deux des niveaux de liaison (12, 12' , 13, 13') de hauteurs différentes (h₁, h₂, h₁', h₂') coïncident.

3. Pneumatique de véhicule selon la revendication 1 ou 2, **caractérisé en ce que** le niveau de liaison le plus bas (12, 12') a une hauteur (h₁, h₁') de 15 % à 25 % de la profondeur de profilé (T).

4. Pneumatique de véhicule selon l'une des revendications 1 à 3, **caractérisé en ce que** le niveau de liaison le plus bas (12, 12') comporte une surface de niveau (12a, 12a') dont l'extension dans la direction circonférentielle est supérieure à son extension dans la direction de l'extension des rainures transversales ou des rainures borgnes.

5. Pneumatique de véhicule selon l'une des revendications 1 à 4, **caractérisé en ce que**, dans le cas de la liaison formée dans une rainure borgne (9, 10, 11), le niveau de liaison le plus haut (13') comporte une surface de niveau (13'a) qui est supérieure d'au moins 30 % à la surface de niveau (12'a) du niveau de liaison le plus bas (12').

6. Pneumatique de véhicule selon la revendication 1, **caractérisé en ce que**, dans le cas de la liaison formée dans une rainure transversale (6, 7, 8), le niveau de liaison le plus haut (13) est formé sur 60 % à 80 % de la longueur d'extension (1) de la rainure transversale (6, 7, 8) .

7. Pneumatique de véhicule selon l'une des revendications 1, 2 ou 6, **caractérisé en ce que**, dans le cas de la liaison formée dans une rainure transversale (6, 7, 8), le niveau de liaison le plus haut (13) a une hauteur (h₂) qui est de 30 % à 40 % de la profondeur de profilé (T).

8. Pneumatique de véhicule selon la revendication 1 ou 5, **caractérisé en ce que**, dans le cas de la liaison formée dans une rainure borgne (9, 10, 11), le niveau de liaison le plus haut (13') a sur son bord de niveau une hauteur (h₂') qui est de 30 % à 40 % de la profondeur de profilé (T), la hauteur (h₂') augmentant en direction de l'extrémité de la rainure borgne et étant supérieure jusqu'à 1,0 mm à l'extrémité de la rainure borgne.

9. Pneumatique de véhicule selon l'une des revendications 2 à 7, **caractérisé en ce que** la liaison comporte deux niveaux de liaison (12, 12', 13, 13') de hauteurs différentes (h₁, h₂, h₁' , h₂') ou se compose de deux niveaux de liaison (12, 12', 13, 13') de hauteurs différentes (h₁, h₂, h₁', h₂') qui sont pourvues de bords de niveau qui s'étendent au moins sensiblement selon un angle (γ) de 10° à 30° l'un par rapport à l'autre.

10. Pneumatique de véhicule selon l'une des revendications 1 à 9, **caractérisé en ce que** les nervures (14, 14') ont une hauteur (h₃, h₃') et une largeur (b₁, b₁') à leur base de 0,5 mm à 1,0 mm.
